(19) Europäisches Patentamt
European Patent Office
Office européen des brevets

(11) **EP 3 716 549 A1**

(12) **EUROPEAN PATENT APPLICATION**

(43) Date of publication:
**30.09.2020 Bulletin 2020/40**

(51) Int Cl.:
***H04L 12/877*** (2013.01)   ***H04L 12/873*** (2013.01)
***H04L 12/911*** (2013.01)

(21) Application number: **19305395.6**

(22) Date of filing: **28.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings**
**75017 Paris (FR)**

(72) Inventor: **THIAGARAJ, Jeganath**
**632316 Arni (IN)**

(74) Representative: **Vidon Brevets & Stratégie**
**16B, rue de Jouanet**
**BP 90333**
**35703 Rennes Cedex 7 (FR)**

(54) **BANDWIDTH MANAGEMENT**

(57)   A method of allocating bandwidth to devices connected to a network is provided. The method comprises allocating a first bandwidth to a first client device based on a total bandwidth of the network, the number of a client devices connected to the network, and the required bandwidth for the first client device; and obtaining a leftover bandwidth for allocation to another of the client devices connected to the network based on the first bandwidth allocated to the first client device.

FIG. 2B

EP 3 716 549 A1

**Description**

TECHNICAL FIELD

The present embodiments generally relate to a method and an apparatus for managing bandwidth between devices, and more particularly, to a method and an apparatus for allocating bandwidth between a plurality of devices connected to a network provided by a network access device such as a gateway.

BACKGROUND

In network management a flow is generally termed as a connection to a network device such as a server. For example, a webpage in a browser will create 'N' number of flows establishing N number of connections with one or more servers.

In a typical LAN (Local Area Network) having a gateway as a routing device, pumping more packets per flow can induce congestion. Congestion occurs on a network when a device, such as a router, is receiving more packets than it can handle. A mechanism called Random Early Detection (RED) is an Active Queue Management (AQM) mechanism that is implemented at a router such as a gateway to attempt to avoid congestion. RED takes advantage of the congestion control mechanism of TCP by randomly dropping packets prior to periods of high congestion, RED tells the packet source to decrease its transmission rate. Assuming the packet source is using TCP, it will decrease its transmission rate until all the packets reach their destination, indicating that the congestion has been cleared.

Enhanced versions of RED F-WRED (Flow based Weighted RED) have evolved to provide better congestion control and fairness at per flow level. In F-WRED algorithm packets are randomly dropped prior to periods of high congestion at a per flow level providing better bandwidth fairness across all the flows. F-WRED monitors each flow and signals the specific flow to decrease the congestion window by dropping the packets for that flow to try to ensure the congestion window is fair across all the flows. The congestion window is defined as maximum number of packets sent across link without any packet loss.

In general, flow distribution across all clients are not equal. Some devices will trigger more connections/flows and some devices will have only one connection/flow. The devices initiating more TCP/UDP flows consume more bandwidth than devices having less flows. Since even with Advanced F-WRED algorithm the Congestion window is normalized across all the flows and hence devices with more connection/flows consume more bandwidth than the devices created less number of flows. This leads to bandwidth unfairness across the devices in the LAN network. Such a system can be vulnerable to attackers who can join the network and perform connection flood attack (Such an attack can consume all the available bandwidth of a gateway by continuously creating N number of connections and all other devices in the network face poor network performance).

SUMMARY

According to a first aspect, a method of allocating bandwidth to devices connected to a network is provided. The method comprises allocating a first bandwidth to a first client device based on a total bandwidth of the network, the number of client devices connected to the network, and the required bandwidth for the first client device; and obtaining a leftover bandwidth for allocation to another of the client devices connected to the network based on the first bandwidth allocated to the first client device.

According to a second aspect an apparatus for allocating bandwidth to devices connected to a network is provided. The apparatus comprises one or more processors configured for allocating a first bandwidth to a first client device based on a total bandwidth of the network, the number of a client devices connected to the network, and the required bandwidth for the first client device; and obtaining a leftover bandwidth for allocation to another of the client devices connected to the network based on the first bandwidth allocated to the first client device.

In accordance with another aspect an apparatus for allocating bandwidth to devices connected to a network is provided. The apparatus comprises one or more processors configured for providing each client device with a packet queue, processing at least one packet from each packet queue having one or more packets in a round robin manner. In this embodiment a client queue not having any packets is not polled for processing.

In one or more embodiments, the first allocated bandwidth is determined based on the minimum of the first allocation bandwidth and the required bandwidth for the first client device.

In one or more embodiments, the first client device is selected for allocation of the first allocated bandwidth before allocation of bandwidth to the other client devices connected to the network based on the number of connections of each client device connected to the network In one or more embodiments, a client device having the least number of connections to the network is selected for allocation of bandwidth.

In one or more embodiments, the leftover bandwidth corresponds to the difference between the client bandwidth allocated and the total bandwidth for the network divided by the number of client devices connected to the network.

In one or more embodiments, bandwidth is allocated to other client devices connected to the network in order of priority, the order of priority being determined by the number of connections of each client device to the network.

In one or more embodiments, the bandwidth allocated to a further client device is based on the minimum of (1) the bandwidth for the further client device and (2) the total bandwidth of the network divided by the number of client devices connected to the network and the leftover bandwidth determined from the previous bandwidth allocation.

In accordance with another aspect an apparatus or an apparatus for allocating bandwidth to devices connected to a network is provided. The apparatus comprises one or more processors configured for providing each client device with a packet queue, processing at least one packet from each packet queue having one or more packets in a round robin manner. In this embodiment a client queue not having any packets is not polled for processing. The method comprises providing each client device with a packet queue, processing at least one packet from each packet queue having one or more packets in a round robin manner. In this embodiment a client queue not having any packets is not polled for processing.

In one or more embodiments, each client device connected to the network has a respective queue for packets and one or more packets are processed from each queue in a round-robin manner.

In one or more embodiments, a queue which does not contain any packets is not polled In one or more embodiments, packets are classified according to a mac address of the respective client device In one or more embodiments, each queue has a respective queue length and queues index and wherein a packet is classified according to at least one of the respective queue index and respective queue length.

A further aspect relates to an electronic device comprising an apparatus according to any of the embodiments. The electronic device may be a network device such as for example gateway.

An embodiment relates to a computer program product comprising instructions which when executed by a processor cause the processor to execute the method of any embodiment.

In one or more embodiments if a client device consumes volume less than the allocated amount of bandwidth, then the leftover bandwidth in excess of the consumed bandwidth may be load shared between one or more other client devices connected to the network.

BRIEF DESCRIPTION OF THE DRAWINGS

FIG.1 is a schematic diagram of a network in which one or more embodiments may be implemented;

FIG.2A is a flow chart illustrating steps of a method for allocating bandwidth in a network according to an embodiment;

FIG.2B is a schematic diagram of a network in which one or more embodiments may be implemented;

FIG. 3 is a block diagram of a system for allocating bandwidth in a network according to an embodiment;

FIG. 4 is a flow chart of a method for generating a client queue in accordance with an embodiment;

FIG. 5 is a flow chart of a method for classifying packets in a network according to an embodiment;

FIG. 6 is a schematic block diagram of a device for allocating bandwidth in a network according to an embodiment;

FIG. 7 is a flow chart illustrating steps of a method for allocating bandwidth in a network according to an embodiment;

FIG. 8 is a flow chart illustrating steps of a method for managing egress at a WAN port according to an embodiment; and

FIG. 9 is a block diagram of a device for allocating bandwidth in a network according to an embodiment.

DETAILED DESCRIPTION

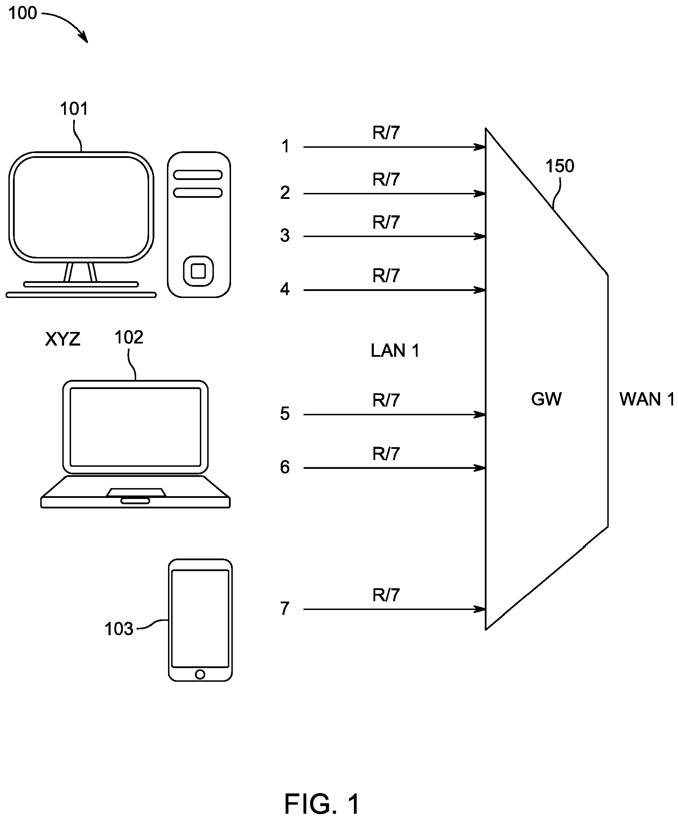

FIG. 1 illustrates an example of a system in which one or more embodiments may be implemented. The system comprises a gateway device 150 connected between a Wide Area Network WAN1 and a Local Area Network LAN1. A plurality of client devices 101, 102 and 103 are connected to the network LAN1. In this example, client device 101 is a computer, client device 102 is a laptop computer and client device 103 is a smartphone.

In the illustrated example the total available bandwidth rate of the LAN is R=10kbps. Assuming the available bandwidth is shared equally among the connections or flows of the connected client devices

- Client device 101 (PC) has 4 flows/connections consuming 56% of the total network bandwidth ~5.6kbps
- Client device 102(Laptop) has 2 flows/connections consuming 28% of the total network bandwidth ~2.8kbps
- Client device 103(Mobile) has 1 flow/connection consuming 14% of the total network bandwidth ~1.4kbps

In this example client device 103 may be considered to be a priority device performing important downloads (requiring of bandwidth 3kbps). However, in this example, due to equal sharing of the total network bandwidth between all the connection, the bandwidth of client device 103 is limited to 1.4kbps because of router capability. Because of lack of policing of the bandwidth consumed by client device 101, device 101 consumes more bandwidth, for example by increasing its number of connections and causing client device 103 to have less bandwidth.

A method for allocating bandwidth LAN1 to client devices connected to a network such as for example the gateway LAN network illustrated in Figure 1 involves selecting a priority client device for allocation of the total network bandwidth based on the number of connections to the network per client device. The client device with the minimum number of connections is selected from among the client devices connected to the network. The bandwidth allocated to the selected client device is the minimum of (1) the required bandwidth for the selected client device and (2) the total network bandwidth divided by the number of connected clients. If the required bandwidth of the selected client device is less than the total network bandwidth divided by the number of connected clients, an excess or leftover bandwidth is obtained - i.e. if the allocated bandwidth is less than the total network bandwidth divided by the number of connected clients, an excess or leftover bandwidth is obtained. The excess or leftover bandwidth can be allocated to one or more of the remaining client devices connected to the network. The excess (leftover) bandwidth is determined to be the difference between the bandwidth allocated to the selected device and the total network bandwidth divided by the number of connected clients. Bandwidth is then allocated to the remaining clients in order of priority - the order of priority is determined by the number of connections of each client device to the network. The remaining client with the least number of connections is selected as the next client device for allocation of bandwidth. The bandwidth allocated to the next device is determined to be the minimum of (1) the required bandwidth for that client and (2) the total available bandwidth divided by the number of connected clients + the excess bandwidth determined from the previous bandwidth allocation.

A method for bandwidth allocation according to an embodiment may be represented mathematically as follows: A parameter K(i) is introduced which corresponds to bandwidth allocated to a client device i. K(i) may vary from minimum required bandwidth for the client device i - to - maximum of R/(number of station connected)) If:

n = total number of client devices using the gateway network

R = Total output rate of the gateway (total network bandwidth)

TBreq = Total Bandwidth required for a client device corresponding to the sum of the bandwidths required for each connection of the client device.

Tc = Total number of connections to the network for a client device

ExcessBw - bandwidth leftover if required bandwidth TBreq is less than R/n i.e. R/n-TBreq

Then the bandwidth allocated to client device i of a plurality of n devices may be represented as:

$$K(i) = minimum(TBreq, R/n) \text{ if } Tc(i) = minimum(Tc1, Tc2,\ldots Tcn)$$

$$\text{else } K(i) = minimum(TBreq, R/n + ExcessBw)$$

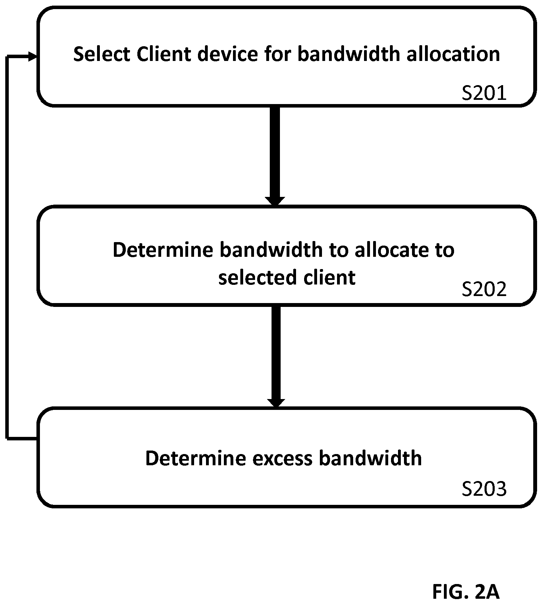

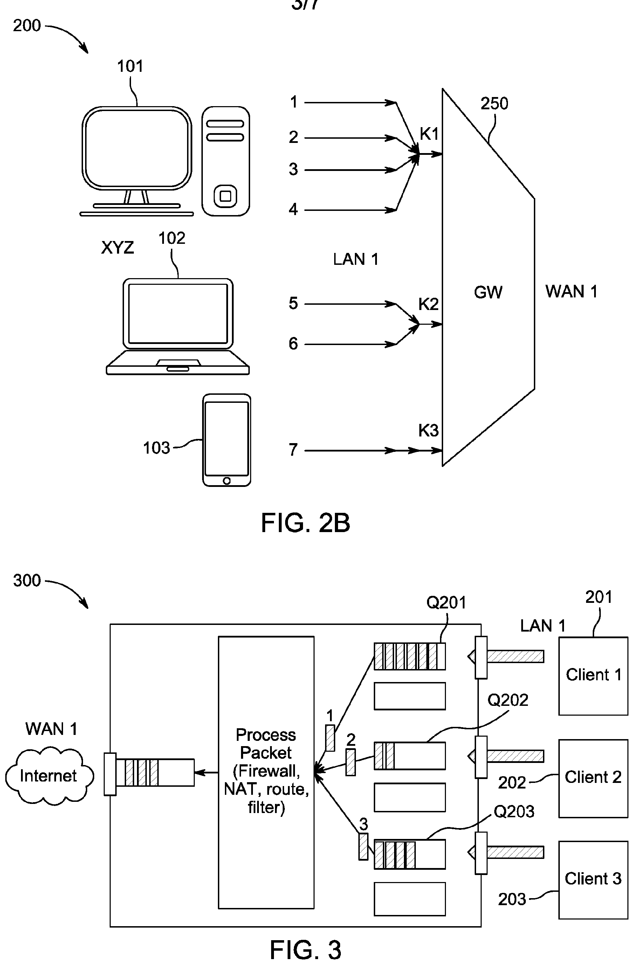

Fig 2A is a flow chart illustrating steps of a method for allocating bandwidth to a plurality of client devices connected to a network according to an embodiment. Fig. 2B illustrates a system 200 implementing a method according to an embodiment for allocating bandwidth between client devices 101, 102 and 103 of Figure 1. In an initial step S201 the client device of the client devices connected to the network having the least number of connections is selected. Using the example of Figure 1 the total bandwidth of network LAN1 from the gateway 250 R=10kbps, The number of connections for each client device connected to the network is as follows:

Total number of connections from client device 101 - Tc1 = 4

Total number of connections from client device 102 - Tc2 = 2

Total number of connections from client device 103- Tc3 = 1

The minimum number of connections of the three client devices 101, 102 and 103 is determined: minimum(Tc1,Tc2,Tc3). In this case client 103 has the least number of connections i.e. 1 = minimum(1,2,4) corresponding to Tc3. The total number of connections to the network of client device 103. Hence client device 103 takes priority for allocation of bandwidth over the other client devices.

In step S202 the bandwidth to be allocated to the selected client 103 is determined. The bandwidth to be allocated to client 103 is determined to be the minimum of the required bandwidth for client 103 and the total network bandwidth divided by the number of connected client devices, i.e K(3) = minimum (TBreq, R/3)

In this example client device 103 has a download requirement TBreq of 3kbps. In the example the total network bandwidth is 10kbps and the number of connected clients is 3 i.e. K(3) = minimum(3kbps, 10kbps/3) K(3) = minimum(3kbps, 3.3kbps).The minimum of the determined bandwidth value 3.3kbps and the required bandwidth 3.0kps is the required bandwidth TBreq =3.0kps.

The bandwidth allocated to client device 103 is thus determined to be the required bandwidth of the client device 103. K(3) = 3kbps The gateway allocates bandwidth k(3) i.e 3kbps, as bandwidth for client device 103. Client device 103 get can a good user experience, since the bandwidth allocated corresponds to the bandwidth required for that device.

In step S203 an excess (leftover) bandwidth is then determined. The excess bandwidth can be allocated to one or more of the remaining client devices 101, 102 connected to the network. The excess bandwidth is determined to be the difference between the bandwidth allocated to the selected priority client device 101 and the total available bandwidth divided by the number of connected client devices (3)

$$\text{Excess bandwidth: ExcessBw} = R/3 - k(3) = 10\text{kbps}/3 - 3\text{kbps} = 0.3\text{kbps}$$

The method returns to step S201 to select, for bandwidth allocation, the client device with the minimum number of connections of the remaining two client devices 101 and 102: i.e. minimum(Tc1,Tc2) which in this example is Tc2 corresponding to the total connections for client device 102. Since client device 102 has 2 connections and each connection requires a bandwidth of 1kbps. The total required bandwidth for client 102 TBreq = 1kbps + 1kbps = 2kbps

The bandwidth to be allocated to client device 102 is determined in step S202. In this case the excess bandwidth ExcessBw determined in the allocation of bandwidth to the first selected client device 103 is taken into consideration. The bandwidth to be allocated to client device 102 is determined to be the minimum of (1) the total required bandwidth for client device 102 and (2) the the total network band width divided by the number of connected client devices + the excess bandwidth i.e

$$K(2) = \text{minimum (TBreq, (R/3)+Excessive Bandwidth)}$$

In this example

$$K(2) = \text{minimum}(2\text{kbps}, 10\text{kbps}/3 + \text{Excessive Bw}) \quad K(2) = \text{minimum}(2\text{kbps}, 3.3\text{kbps} + 0.3\text{kbps})$$

$$K(2) = \text{minimum}(2\text{kbps}, 3.6\text{kbps})$$

$$K(2) = 2\text{kbps}.$$

In this example the total required bandwidth for client 102 is allocated to client 102. Client device 102 can therefore obtain good user experience, and not be starved of bandwidth. In step S203 the excess bandwidth is determined as the total bandwidth divided by the number of client devices plus the excess bandwidth previously obtained minus the bandwidth allocated to client device 102
i.e.

$$\text{Excess bandwidth} = R/3 - k(2) + \text{excess Bw } k3 = 10\text{kbps}/3 - 2\text{kbps} + 0.3\text{kbps} = 1.6\text{kbps}$$

In this example only one device remains for allocation of bandwidth. A subsequent step involves determining the bandwidth allocation for the remaining client device 101 in step 202.

Client device 101 has 4 connections, each requiring a bandwidth of 1kbps. The total required bandwidth for client device 101 is thus TBreq = 2.6kbps + 1kbps + 1kbps + 1kbps = 5.6kbps.

In this case the excess bandwidth ExcessBw determined in the allocation of bandwidth to the first selected client device 103 and the second selected device 102 is taken into consideration. The bandwidth to be allocated to client device 103 is determined to be the minimum of (1) the total required bandwidth for client device 103 and (2) the total bandwidth divided by the number of connected client devices + the total excess bandwidth i.e K(1) = minimum (TBreq, (R/3)+Excessive Bandwidth)

$$K(1) = \text{minimum}(5.6\text{kbps}, 10\text{kbps}/3 + \text{Excess Bw}) \, K(1) = \text{minimum}(5.6\text{kbps}, 3.3\text{kbps} + 1.6\text{kbps})$$

$$K(1) = \text{minimum}(5.6\text{kbps}, 4.9\text{kbps})$$

$$K(1) = 4.9\text{kbps}.$$

A bandwidth of 4.9kbps is allocated to client device 101. In this way client device 101 obtains good user experience, as it consumes all the available excess bandwidth.

Excess bandwidth = R/3 - k(1) + Total Excess Bw = 10kbps/3 - 5.6kbps + 1.6kbps = - 0.6kbps. i.e Excess bandwidth =0 kbps enabling an efficient use of bandwidth for all client devices loss of bandwidth for other devices.

The bandwidth allocated to the client devices in the described embodiment is compared with the bandwidth allocated by simply dividing the available gateway bandwidth R=10kbps by the number of connections. Client 101(PC) having 4 connections consuming 56% of bandwidth is allocated bandwidth of 5.6kbps providing good user experience. Client device 102 (Laptop) having 2 connections consumes 28% of is allocated a bandwidth of 2.8kbps providing good user experience but client device 103(Mobile) having 1 connection and consuming 14% of bandwidth is allocated 1.4kbps resulting in a poor user experience

Fig. 3 is a block diagram illustrating the architecture of another embodiment for allocating bandwidth to a plurality of client devices 201, 202 and 203. In this embodiment the following method is applied. A dedicated queue K(i)- is created respectively for each client device. One packet at a time is taken from each queue K(i) in a priority round robin fashion i.e. in one at a time from each queue in a cyclic manner. In this way it is ensured that client device k(i) gets a minimum bandwidth required for its flow. For example, if in case of device 203, the required bandwidth is 3kbps.

As previously described the client device 203 will be allocated a bandwidth of 3kbps, even though the maximum available bandwidth for the device is 3.3kbps (i.e 10Kbps/3). If client device 203 has no more packets to send through at any given instance, then another available queue (non - zero queue) will be polled one packet at a time. For example, if in case device 203 k(3) is empty, device 102(i.e, K(2)) and device 201(i.e, k(1)) will be polled. Thus k(1) of device 201 and k(2) share entire bandwidth R in a round robin fashion.

Figure 3 illustrates where each client 201, 202 and 203 is given a dedicated ingress and egress queue. The order of processing packets from each queue will be in round robin fashion with constant processing window (for example 1 packet per window). The focus is to provide packet processing not based on a per flow basis (as existing methods such as RED, F - WRED), but based on per client basis connected to a network.

The method includes building ingress and egress queue per device. When a new client device joins the network a new entry is created in an ARP table. A new queue pair (ingress and egress) are allocated for every device present in ARP table. The Queue size varies for each platform based on available total memory. As an example, a minimum could be 5 packets (5 packets * 1.5k) ~= 8k memory per queue.

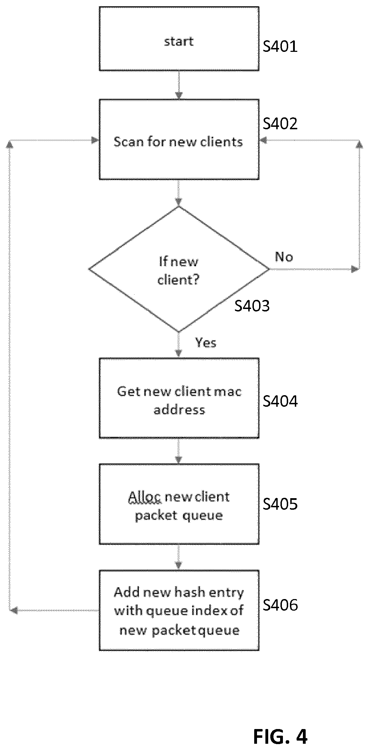

Figure 4 illustrates steps of a method for creating queues for a client device according to an embodiment. An initial step S402 involves scanning for new client devices. If in step S403 a new client is discovered the mac address of the client is obtained in S404 and a packet queue is allocated to the client in step S405. In step S406 a new hash entry is added with the queue index of the new packet queue.

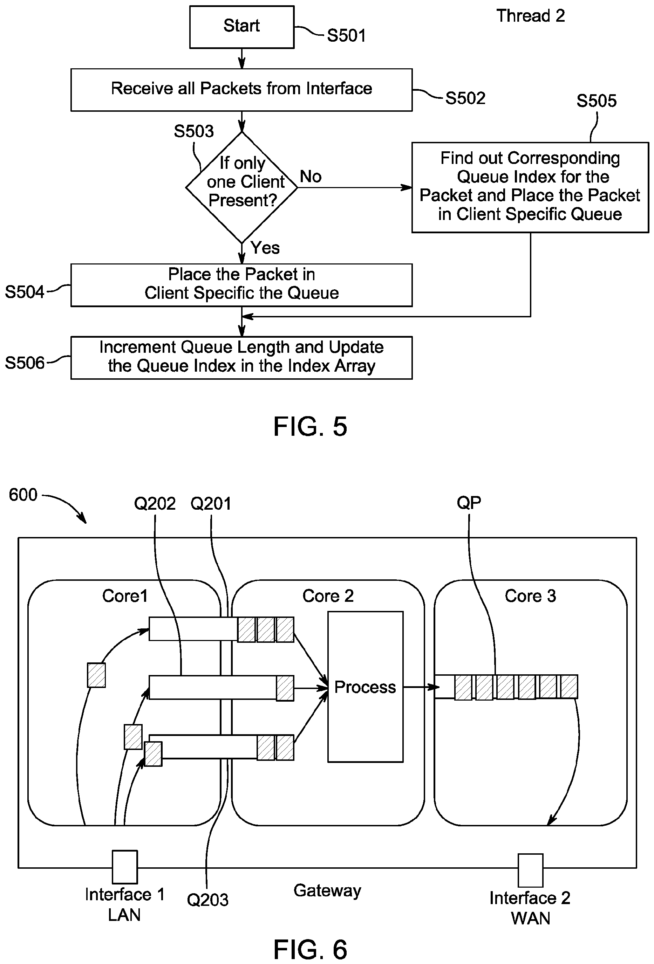

Figure 5 illustrates steps of a method for packet classification according to an embodiment. In step S502 all packets are received via an interface of the gateway. In step S503 it is determined if only one client device is connected to the network. In the case where only one client is connected the packet is placed in a client specific queue in step S504, otherwise if more than one client is connected the corresponding queue index for the client device is determined in step S505 and the packet is placed in the client specific queue. In step S506 the client queue is incremented and the queue index is updated in the index array. For packet classification based on source mac address, the packet arriving at the gateway interface is not always one-to-one mapping with the client mac address.

For example:

i) an Ethernet interface will have one-to-one mapping with a client device, i.e. only one client device connected

ii) a wireless interface is often not one-to-one mapping with a client.

In general, a gateway will have interface based on per radio basis. All the clients connected in 2.4G will send packets and will arrive in one of the two interfaces in the gateway. Hence classifying the packets based on mac address and dropping in the corresponding queue can be useful, especially for the wireless case.

For the ethernet interface all the packets in a gateway for an ethernet interface, in general corresponds to only single connected device to the interface. However, there are scenario's where an ethernet device may have multiple clients that send and receive traffic across a single ethernet interface. In an embodiment, packet classification is skipped when one client is detected as being connected to the interface - wired or wireless.

For selective dequeuing of client queues, efficient queue handling can be useful when a large number of clients are connected and will in turn have large number of queues.

The method of the present embodiment can be adapted to efficiently dequeue packets from only queues the which have packets. In this way all the client queues in a gateway will not be polled all the time. In this method a new array called queue index array is created which will hold the queue index of packet available queues. Most of the time not all of the clients queues hold packets. Consequently, it is more efficient to list them out separately and process. A parameter referred to as queue length is given to each queue. The queue length represents the number of packets present in the queue.

Multicore processing can be applied for better performance. In general, for better performance all the device queues will be held lockless and readily available to access to the processor at any time. But a lockless readily available device queue may be difficult in multi - processor architecture where the chances of accessing same device queue by two different processors at the same time is high, often leading to chaos.

To this end pipeline architecture 600 is provided for efficient packet processing as illustrated in Figure 6. One dedicated core (CORE 1) to poll all the interfaces and classify the packets. Only this core has privilege to access the devices queue (Q101, Q102, Q103). A second core (CORE 2) operates bandwidth fairness and network functionality egress of packets to its corresponding port (CORE 3) and other functionalities (for example creating new queue (QP) based on new clients available, get processing window parameter from User, etc).

In an embodiment bandwidth allocation to clients is performed with a dynamic processing window. Packets from a client queue is taken to processing in rate of one packet per queue referred to as a processing window (default value 1 packet per queue). This helps to provide clients in the network to get a fair amount of bandwidth share. Processing at rate of one packet per queue is helps to honor the latency sensitive packets across all the clients. Processing window is per client basis and hence a user can change the processing window for a client device to more (taking more packet for processing in this client queue). By doing this more latency is given and bandwidth priority to specific client compromising latency and bandwidth of all other clients.

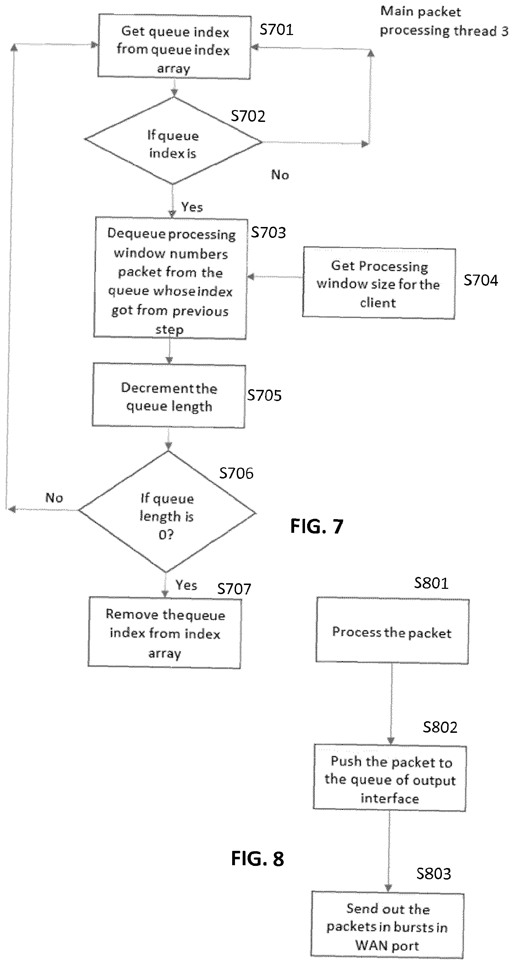

Fig. 7 illustrates steps of a method using a dynamic processing method for allocating bandwidth to clients according to an embodiment. In step S701 a queue index is obtained from a queue index array. In step S702 if queue index is x. If yes dequeue processing of window numbers of the packet from the queue whose index was obtained in the previous step is performed in step S703. In step S704 a processing window size is obtained for the processing of step S703. In Step S805 the queue length is decremented. If in step S706 it is determined that the queue a length is zero, the queue index is removed from the index array. Otherwise the method returns to step S701 to obtain another queue index from the index array.

Ageing timeout can be performed for the client queue. Creating queues per device can be a costly operation. Thus, aging timeout cannot be very small. Having a very large timeout value will be vulnerable to client flood attack (simulating many clients possible and making Gateway to run out of memory). Thus, for example a window value of 1800 sec can be kept. This value derived from idle standard timeout value for wireless clients.

Figure 8 is a flow diagram representing steps of an egress threat at a WAN port. In a multicore environment this thread should be load shared with queue creation thread (i.e) core 3. In a first step S801 the packet is processed, in step S802 the packet is pushed to the queue of the output interface and then in step S803 packets are sent out in bursts in WAN port.

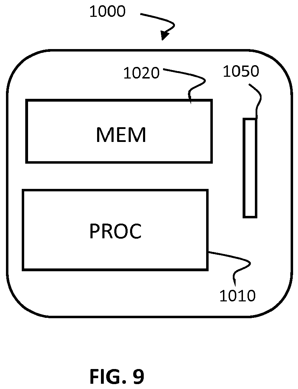

Fig. 9 illustrates a block diagram of an example of a device in which embodiments may be implemented. The device 1000 may include the various components described below and is configured to perform one or more of the embodiments described in this disclosure. Examples of such devices include, but are not limited to, network devices such as gateways.

Elements of device 1000, singly or in combination, may be embodied in a single integrated circuit, multiple ICs, and/or discrete components. For example, in at least one embodiment, the processing elements of system 1000 are distributed across multiple ICs and/or discrete components. In various embodiments, the system 1000 is communicatively coupled to other systems, or to other electronic devices, via, for example, a communications bus or through dedicated input and/or output ports.

Device 1000 includes at least one processor 1010 configured to execute instructions loaded therein for implementing, for example, the various aspects described in this application. Processor 1010 may include embedded memory, input output interface, and various other circuitries as known in the art. Device 1000 includes at least one memory 1020 (e.g., a volatile memory device, and/or a non-volatile memory device), including, but not limited to, EEPROM, ROM, PROM, RAM, DRAM, SRAM, flash, magnetic disk drive, and/or optical disk drive.

Program code to be loaded onto processor 1010 to perform the various embodiments described in this application and may be loaded onto memory 1020 for execution by processor 1010. In accordance with various embodiments, one or more of processor 1010, and memory 1020, may store one or more of various items during the performance of the processes described in this disclosure.

The input to the elements of device 1000 may be provided through various input elements. Such input elements include, but are not limited to, (i) a wireless interface for receiving a wireless signal, (ii) a composite input terminal, (iii) a USB input terminal, and/or (iv) an HDMI input terminal.

The device 1000 includes a communication interface 1050 that enables communication with client devices to transmit and to receive data. Data is transmitted to device 1010, in various embodiments, via interface 1050 using a wireless LAN network for example a Wi-Fi network such as IEEE 802.11. The device provides access to outside networks WAN including the Internet for allowing streaming applications and other over-the-top communications.

An embodiment provides a computer program comprising instructions which when executed by one or more processors cause the one or more processors to perform the method according to any of the embodiments described above. One or more of the present embodiments also provide a computer readable storage medium having stored thereon instructions for encoding or decoding video data according to the methods described above.

Embodiments described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, gateways and other devices that facilitate communication of data.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

**Claims**

1. A method of allocating bandwidth to client devices, the method comprising allotting a first allocation bandwidth for potential allocation to a first client device based on a total bandwidth for the network and the number of a client devices connected to the network,
allocating a first client bandwidth to the first client device, the first client bandwidth being based on the first allocation bandwidth and a bandwidth required for the first client device;
obtaining a leftover bandwidth for allocation to another of the client devices connected to the network based on the first allocation bandwidth and the first client bandwidth allocated to the first client device.

2. An apparatus for allocating bandwidth to client devices, the apparatus comprising one or more processors configured for

allotting a first allocation bandwidth for potential allocation to a first client device based on a total bandwidth for the network and the number of a client devices connected to the network,

allocating a first client bandwidth to the first client device, the first client bandwidth being based on the first allocation bandwidth and a bandwidth required for the first client device;

obtaining a leftover bandwidth for allocation to another of the client devices connected to the network based on the first allocation bandwidth and the first client bandwidth allocated to the first client device.

3. A method according to claim 1 or an apparatus according to claim 2, wherein the first client bandwidth is determined based on the minimum of the first allocation bandwidth and the required bandwidth for the first client device.

4. A method according to claim 1 or 3, or an apparatus according to claim 2 or 3, wherein the first client device is selected for allocation of the first client bandwidth before allocation of bandwidth to the other client devices connected to the network based on the number of connections of each client device connected to the network.

5. A method or apparatus according to claim 4 wherein a client device having the least number of connections to the network is selected for allocation of bandwidth before allocation of bandwidth to one or more client devices having a greater number of connections.

6. A method according to any of claims 1 and 2-5, or an apparatus according to any of claims 2-5, wherein the leftover bandwidth corresponds to the difference between the client bandwidth allocated and the total bandwidth for the network divided by the number of client devices connected to the network.

7. A method according to any of claims 1 and 2-6, or an apparatus according to any of claims 2-6, wherein bandwidth is allocated to other client devices connected to the network in order of priority, the order of priority being determined by the number of connections of each client device to the network.

8. A method according to any of claims 1 and 2-7, or an apparatus according to any of claims 2-7, wherein the bandwidth allocated to a further client device is based on the minimum of (1) the bandwidth required for the further client device and (2) the total bandwidth of the network divided by the number of client devices connected to the network and the leftover bandwidth determined from the previous bandwidth allocation.

9. A method according to claim 1 or an apparatus according to claim 2, wherein each client device connected to the network has a respective queue for packets and one or more packets are processed from each queue in a round-robin manner.

10. A method or apparatus according to claim 9 wherein a queue which does not contain any packets is not polled.

11. A method or apparatus according to claim 9 or 10 wherein packets are classified according to a mac address of the respective client device.

12. A method or apparatus according to any of claims 9 to 11 wherein each queue has a respective queue length and queues index and wherein a packet is classified according to at least one of the respective queue index and respective queue length.

13. An electronic device comprising an apparatus according to any of claims 2 to 12.

14. An electronic device according to claim 13 comprising a gateway.

15. A computer program product comprising instructions which when executed by a processor, cause the processor to execute the method of any of claims 1 and 3 to 12.

FIG. 1

**FIG. 2A**

Зтт

FIG. 2B

FIG. 3

start — S401

Scan for new clients — S402

If new client? — S403

No

Yes

Get new client mac address — S404

Alloc new client packet queue — S405

Add new hash entry with queue index of new packet queue — S406

**FIG. 4**

Thread 2

Start ——S501

Receive all Packets from Interface ——S502

S503

If only one Client Present?

No → Find out Corresponding Queue Index for the Packet and Place the Packet in Client Specific Queue ——S505

Yes

S504—— Place the Packet in Client Specific the Queue

S506—— Increment Queue Length and Update the Queue Index in the Index Array

FIG. 5

600

Q202  Q201  QP

Core1  Core 2  Core 3

Process

Interface 1 LAN  Q203  Gateway  Interface 2 WAN

FIG. 6

Main packet
processing thread 3

Get queue index
from queue index
array — S701

S702
If queue
index is

No

Yes

Dequeue processing
window numbers
packet from the
queue whose index
got from previous
step — S703

Get Processing
window size for the
client — S704

Decrement the
queue length — S705

S706
If queue
length is
0?

No

**FIG. 7**

Yes — S707
Remove the queue
index from index
array

S801
Process the packet

S802
Push the packet to
the queue of output
interface

**FIG. 8**

S803
Send out the
packets in bursts in
WAN port

15

1000

1020    1050

MEM

PROC

1010

**FIG. 9**

Europäisches
Patentamt

European
Patent Office

Office européen
des brevets

# EUROPEAN SEARCH REPORT

Application Number

EP 19 30 5395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOU X ET AL: "The concept of fairness and a GFC protocol", LOCAL COMPUTER NETWORKS, 1992. PROCEEDINGS., 17TH CONFERENCE ON MINNEAPOLIS, MN, USA 13-16 SEPT. 1992, LOS ALAMITOS, CA, USA,IEEE COMPUT. SOC, US, 13 September 1992 (1992-09-13), pages 30-35, XP010030856, DOI: 10.1109/LCN.1992.228177 ISBN: 978-0-8186-3095-8 | 1-3,6, 13,15 | INV. H04L12/877 H04L12/873 H04L12/911 |
| Y | * abstract * * page 31, paragraph 2. * | 4,5, 7-12,14 | |
| Y | US 8 849 331 B2 (LIU CHUNMING [US]; LAWRENCE CHRISTOPHER [US]; T MOBILE USA INC [US]) 30 September 2014 (2014-09-30) * column 2, lines 50-52 * * column 14, lines 22-45 * | 4,5,7,8 | |
| Y | US 2003/056000 A1 (MULLENDORE RODNEY N [US] ET AL) 20 March 2003 (2003-03-20) * paragraphs [0118] - [0119], [0125] - [0127]; figures 14,15a,15b * | 9-12,14 | |

TECHNICAL FIELDS
SEARCHED (IPC)

H04L

The present search report has been drawn up for all claims

| Place of search | Date of completion of the search | Examiner |
|---|---|---|
| The Hague | 26 August 2019 | Kesting, Christiane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 30 5395

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2019

| Patent document cited in search report | | Publication date | Patent family member(s) | | Publication date |
|---|---|---|---|---|---|
| US 8849331 | B2 | 30-09-2014 | CN<br>EP<br>US<br>WO | 103875290 A<br>2745577 A1<br>2013217428 A1<br>2013026018 A1 | 18-06-2014<br>25-06-2014<br>22-08-2013<br>21-02-2013 |
| US 2003056000 | A1 | 20-03-2003 | NONE | | |

EPO FORM P0459

For more details about this annex : see Official Journal of the European Patent Office, No. 12/82